# EUROPEAN PATENT SPECIFICATION

(11) **EP 2 304 553 B1**
(45) Date of publication and mention of the grant of the patent: **31.07.2019**
(21) Application number: 09751449.1
(22) Date of filing: 20.05.2009
(51) Int. Cl.: G06F 8/41, G06F 8/20

(54) **SYSTEM, METHOD AND COMPUTER PROGRAM PRODUCT FOR REPLICATABLE PROGRAM FLOW WITH GENERATIVE COMPONENTS**
SYSTEM, VERFAHREN UND COMPUTERPROGRAMMPRODUKT FÜR REPLIZIERBAREN PROGRAMMABLAUF MIT GENERATIVEN KOMPONENTEN
SYSTÈME, PROCÉDÉ ET PROGICIEL POUR DÉROULEMENT DE PROGRAMME REPRODUCTIBLE À COMPOSANTS GÉNÉRATIFS

(30) Priority: 20.05.2008 US 5469808 P
(43) Date of publication of application: 06.04.2011
(73) Proprietor: Bentley Systems, Inc., Exton, PA 19341-0678 (US)
(72) Inventor: BROWN, Jeffrey, West Chester Pennsylvania 19380 (US)
(74) Representative: Berggren Oy, Tampere
(86) International application number: PCT/US2009/044639
(87) International publication number: WO 2009/143221

(56) References cited:
- US-A1- 2008 062 167
- "Bentley Platform Training Generative Components Essentials", 20070901 , 1 September 2007 (2007-09-01), pages I-VI,1, XP008140560, Retrieved from the Internet: URL:http://www.kngk.agh.edu.pl/pliki/gener ative/GenerativeComponentsEssentialsCourse Guide.pdf [retrieved on 2011-11-10]
- BACON D F ET AL: "Compiler transformations for high-performance computing", ACM COMPUTING SURVEYS, ACM, NEW YORK, NY, US, US, vol. 26, no. 4, 1 December 1994 (1994-12-01), pages 345-420, XP002246513, ISSN: 0360-0300, DOI: 10.1145/197405.197406
- EVGUENI N. LOUKIPOUDIS: "Object management in a programming-by-example, parametric, computer-aided-design system", THE VISUAL COMPUTER, vol. 12, no. 6, 1 June 1996 (1996-06-01), pages 296-306, XP55011693, ISSN: 0178-2789, DOI: 10.1007/BF01782291
- ROLLER D: "AN APPROACH TO COMPUTER-AIDED PARAMETRIC DESIGN", 1 June 1991 (1991-06-01), COMPUTER AIDED DESIGN, ELSEVIER PUBLISHERS BV., BARKING, GB, PAGE(S) 385 - 391, XP000209710, ISSN: 0010-4485 * abstract * * page 385, left-hand column, paragraph 3 * * page 385, right-hand column, paragraph 2; figure 2 * * page 386, right-hand column, last paragraph - page 387, right-hand column, paragraph 1; figure 3 * * page 388, left-hand column, paragraph 2 - page 388, left-hand column, paragraph 8 * * page 388, right-hand column, paragraph 3 - page 389, left-hand column, paragraph 2 * * page 389, left-hand column, paragraph 5 - page 389, right-hand column, paragraph 3 *
- BENTLEY INSTITUTE: 'Bentley Platform Training Generative Components Essentials', [Online] September 2007, XP008140560 Retrieved from the Internet: <URL:http://digitoolbox.wdfiles.com/local-f iles/generativecomponents/GCGuide.pdf> [retrieved on 2009-06-23]
- CICHY, M.: 'Parametric Design: An Implementation of Bentley Systems Generative Components', [Online] 2006, UNIVERISTY OF WATERLOO, XP008140567 Retrieved from the Internet: <URL:https://uwspace.uwaterloo.ca/bitstream /10012/2866/1/mcichy2006.pdf> [retrieved on 2009-06-23]

## Description

### Background

### Related Art

In computer aided design (CAD) environments, a model or design, e.g. an engineering or architectural design, may be created from geometric 'elements.' Elements may include, for example, lines, arcs, circles, curves, surfaces, solids, text, etc. Elements may be recorded (and made persistent) in a design file (e.g. a .dgn file, .dwg file, etc.). The CAD environment may also provide a set of interactive commands to place and edit these elements.

Generative components (GC) may provide an alternative structure and technique for designing CAD elements, and using the GC elements in models or designs. GC may provide a set of features, for example, lines, curves, arcs, user-defined feature types, etc. GC may have an associated scripting language, e.g. GCScript. The scripting language may be used, for example, to describe and create GC elements, or to provide instructions to the GC CAD environment.

Generative components (GC) may allow for replication of a design element. In replication, a collection of GC elements may be treated as a single element of the same type. For example, a collection of lines may be treated as a single line. However, conventional replication capabilities work only at the single statement and expression level. That is, virtually any linear sequence of statements that was written to work with single values will work with a collection of values.

In contrast, control-flow, or block, statements do not currently support replication. Control-flow statements may include, for example, "do," "for," "foreach," "if," "switch," "while," etc. If a collection of values is passed to a control-flow statement that is expecting a single value, the statement will fail.
D1: "Bentley Platform Training Generative Components Essentials", Sept. 2007, XP008140560, is a manual for using computer assisted design elements (Generative Components), which discloses how a design can be created from multiple instances of a feature and how the feature adapts itself to the local placement conditions.
D2: Bacon, D et al: "Compiler transformations for high performance computing", ACM Computing Surveys, December 1994, XP002246513, discloses an overview of high-level program restructuring techniques for languages such as C and Fortran. A part of the document focuses on optimizing compiler technology, especially loop pushing and scalar expansion techniques.
D3: Loukipoudis E. "Object management in a programming-by-example, parametric, computer-aided-design system", Visual Computer, 1996, discloses an object-naming mechanism of graphical objects in a programming-by-example CAD system. The object-naming mechanism supports the automatic generation of parameter-independent object references in parametric programs.
D4: Roller, D.: "An approach to computer-aided parametric design", Computer aided design, June 1991, discloses generation of parametric models in computer-aided design systems. The method uses automatic storage of geometric constraints during the design input, and the support of topology parameters. Information about the designer's intent is captured, thereby aiming to achieve a more comprehensive description of a design.

### Summary of the invention

The invention is defined in the appended claims.

### Brief Description of the Drawings

In the accompanying drawings:
FIG. 1 depicts an exemplary embodiment of a technical modeling environment (TME) that may be configured to implement generative components and CAD models;
FIG. 2 depicts an example of code that has three code blocks;
FIG. 3 depicts an example of runtime block corresponding to the code blocks of FIG. 2;
FIG. 4 depicts a functional representation of a replicated program code corresponding to FIGS. 2 and 3;
FIG. 5 depicts an example of code that has two replicatable variables in the same code block;
FIG. 6 depicts a functional representation of a replicated program code corresponding to FIG. 5;
FIG. 7 depicts a second functional representation of a replicated program code corresponding to FIG.5;
FIG. 8 depicts a flowchart of a technique for implementing replicatable program flow according to an exemplary embodiment of the invention; and
FIG. 9 depicts an exemplary block diagram of a computer that may be configured to execute the TME illustrated in FIG. 1.

### Detailed Description

Example embodiments of the invention are discussed below. While specific example embodiments are discussed, it should be understood that this is done for illustration purposes only.

Embodiments of the invention may provide, within a generative component (GC) based modeling environment, support for replicatable program flow. The embodiments may support automatic handling of collections of values and/or GC features in any program flow construct that is written to handle a singe value or GC feature. The various steps described below may be performed by a computer.

### REPLICATION

The following examples illustrate the concept of replication.

In a first example, as seen in Table 1, a variable "x" is defined to be an integer. A second variable "y" is defined to be an integer whose value is the sum of twelve and the value of "x."

**Table 1**

| | Column 1 | Column 2 |
|---|---|---|
| int x | x = 5 | x = {4,5,6} |
| int y = x + 12 | y = 17 | y = {16,17,18} |

In Column 1, x is assigned the value 5, and y then has the value 17. In Column 2, x is assigned to be a list of integers: {4,5,6}. The value of y is then set to be a list of integers {16,17,18}. Note that no additional coding is needed in GCScript to support this type of replication. The variables x and y do not need to be defined to hold a collection of values.

In a second example, as seen in Table 2, a variable "z" is defined to be an integer. Then, a statement evaluates whether the value of a variable "z" is less than 7. If the statement is true, then a variable "t" is made to equal the value of "z ."

**Table 2**

| | Column 1 | Column 2 | Column 3 |
|---|---|---|---|
| int z | z = 5 | z = {5,6,7,8} | z = {5,6,7,8} |
| If (z < 7) | (true) | <error> | {true, true, false, false} |
| Then t = z Else t = 1 | t = 5 | <error> | {5,6,1,1} |

Conventionally, the "if' statement will evaluate correctly if "z" is a single value, as in Column 1, but will fail if "z" is a collection of values, as in Column 2. Embodiments of the invention may provide a system and method for supporting replication in this type of example scenario. An example of the desired outcome, according to embodiments of the invention, is shown in Column 3 of Table 2.

In the examples described herein, integer variables are used for simplicity. However, embodiments of the invention may support replication for many different variable types, including GC components or other design elements, such as, for example, lines, curves, points, etc.

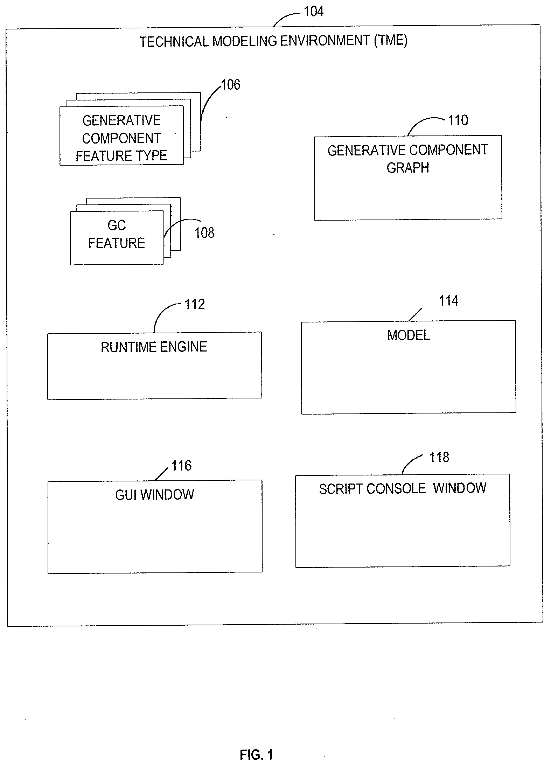

**FIG. 1** depicts an example of a technical modeling environment (TME) 104 that may be configured to provide a computer assisted design (CAD) or computer modeling software application that supports replicatable program flow in GC scripting and modeling. TME 104 may provide one or more generative component feature types 106, one or more GC features 108, a GC graph 110, a runtime engine 112 and a model 114. TME 104 may further provide a graphical user interface (GUI) window 116 and/or a script console window 118 to allow the user to create and use generative components to build, for example, engineering, architectural, and product designs or models.

A GC feature type 106 may be analogous to a class definition in an object-oriented programming environment. A GC feature type 106 may be used to create instances, e.g. features 108, that are analogous to CAD design elements, e.g. point, line, arc, b-spline curve, circle, user-defined feature type, ellipse, elliptical arc, shape, composite curve, B-spline surface, solid, mesh, text, text styles, etc. A GC feature type 106 may be defined in code or script that allows GC features 108 to be created as elements of a CAD model, e.g. in model 114. A GC feature type 106 may include a variety of functions. For example, a GC feature type may include functions to create a CAD element, to relate the CAD element to other CAD elements and/or to a CAD model, and/or to allow the CAD element to be updated.

A GC feature 108 may be a specific instance of a GC feature type 106. A GC feature 108 may be created by instantiation of a GC feature type 106, analogous to the way a class object may be created from a class definition in an object-oriented environment. A GC feature 108 may depend on other GC features 108 when created or updated, or may itself be depended on by other GC features 108. A GC feature 108 may contain one or more properties that describe the GC feature 108. For example, a GC feature 108 may have properties that specify a specific location, direction, size, relationship to another GC feature, or other features to describe the GC feature 108. A GC feature 108 may be stored, for example, as a design element in a model, or may reside in memory on a computer.

A GC graph 110 may be one or more data structures that hold information about the GC features 108 of a model 114. GC graph 110 may manage associations among the GC features 108 in the GC graph 110. For example, a GC line feature may depend on two GC point features as end points. GC graph 110 may hold information that associates the line feature with the point features, so that if the point features change, the line feature may be updated accordingly. In an embodiment, GC graph 110 may contain the GC features 108 of a model 114.

Runtime engine 112 may execute GC scripts. Runtime engine 112 may compile and execute, or interpret, GC script. Runtime engine 112 may support replicatable program flow, which is described further below.

Model 114 may include one or more GC features 108 and/or CAD elements, which may be elements of a more complex design. Model 114 may be a geometric representation of the features and associations within a GC graph 110. A model 114 may represent all or part of, for example, an engineering design, an architectural design, a product design, a graphical design, etc. A model element may be a collection of model elements, i.e., a model element may be replicated.

GUI window 116 may be used for creating, viewing, and using GC feature types 106, GC features 108, GC graph 110, and model 114 symbolically, or through menu and dialog-box driven interfaces. For example, GUI window 116 may display GC graph 110 in a symbolic representation and allow the symbols to be manipulated via dragging. GUI window 116 may provide a way to specify script expressions that interrelate the GC graph features, without requiring full knowledge of the scripting language supported by TME 104.

Script console window 118 may be used for creating and using GC feature types 106, GC graph 110, script editor 112, transaction recorder 114, and model 114 in a text-based manner. For example, script console window 118 may be used for writing code and/or GC script that uses replicatable program flow.

In an embodiment, TME 104 may implement replicatable program flow using implicit indexes and implicit decomposition. An implicit index may be an index associated with a runtime block executing a portion of a GC script. A runtime block may be a runtime manifestation of a code block.

A code block may be, for example, a portion of code where each code instruction has the same scope within the code block. For example, many programming languages define a code block between a pair of brackets. A code block may correspond to the code between one pair of brackets. Code blocks may be nested within another code block.

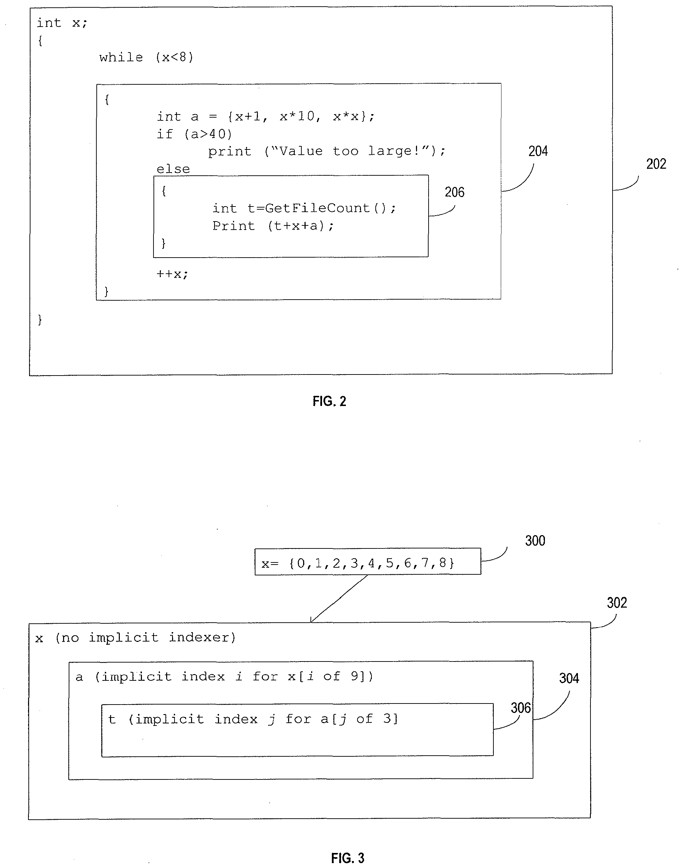

**FIG. 2** illustrates an example of code that has three code blocks: 202, 204, and 206. Code block 202 contains nested block 204, which in turn contains nested block 206. Variables defined with one code block may be accessible to the code in the same code block or to code within a nested code block. Variables defined within a code block are generally not accessible to other non-nested code blocks or "outer" code blocks. For example, in FIG. 2, variable "x" is defined in block 202 and is available to code blocks 202, 204, and 206. Variable "t", however, is only available to code block 206.

A runtime block may be a manifestation of a code block at runtime. For example, a runtime block may include a processor-created variable from the code block, in memory. When the processor leaves the instructions corresponding to the code block, the variable may be destroyed.

In an embodiment of the invention, a runtime block may have zero or more implicit indexes associated with it to support replicatable program flow. An implicit index may include a current index and a total count, for example, "0 of 3", "2 of 10", etc. The total count may be the size or number of objects in the collection of replicated objects. Whenever an object, e.g. a variable or a GC component, is referenced, the implicit index may be applied automatically if that object originates outside of the current runtime block.

**FIG. 3** shows a runtime scenario of three levels of nested runtime blocks corresponding to the code blocks in FIG. 2, where variable "x" is a collection 300. Each runtime block 302, 304, and 306 may have its own implicit index. Runtime block 302 has no implicit index, because there is no need for an implicit index in block 202. Runtime block 304 may have an implicit index for "x," due to the block statement "while". Runtime block 306 may have an implicit index for "a," due to the block statement "if".

Implicit decomposition may mean that, when a "block" statement (e.g., do, for, foreach, if, switch, while, etc.) is run with a collection of replicated values as its argument(s), the runtime engine may automatically "unwind" that replicated value, and execute the block statement repetitiously, once for each value in the collection. The index of the current value, plus the total list count, may serve as the implicit index within the inner execution block. A collection may be, for example, a list, an array, a set, a matrix, etc.

In an embodiment, the runtime engine may create separate processor threads for the "decomposed" operations, if the decomposed operations may be parallelized. In an embodiment, the runtime engine may distribute the decomposed operations to multiple processors if the decomposed operations may be parallelized.

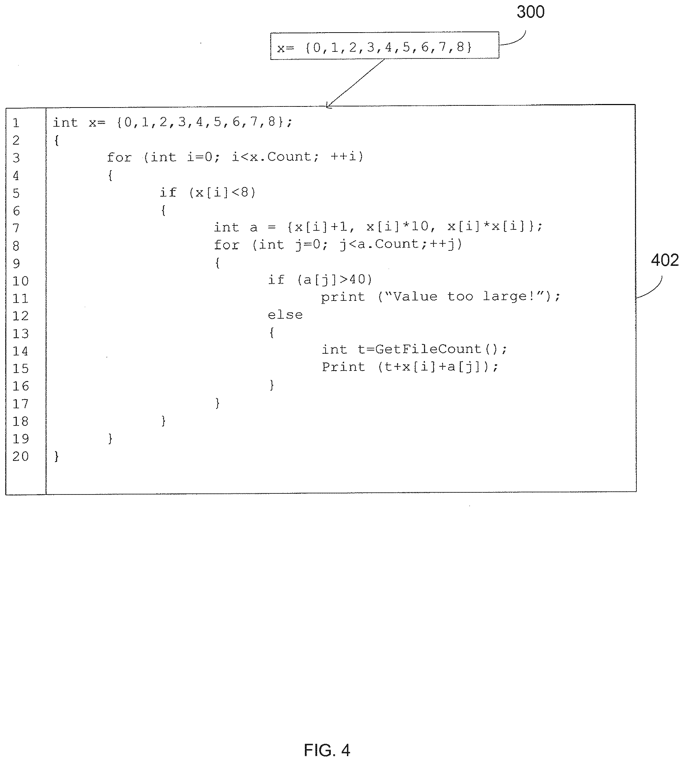

**FIG. 4** depicts an example of decomposed code 402 that may describe the effective result of creating replicatable program flow for the code blocks shown in FIG. 2 and the replicated value 300 for variable x. Embodiments of the invention may not actually rewrite code to reflect the code shown in FIG. 4. However, the runtime engine may behave as though executing the code shown in FIG. 4.

For example, the "while" block statement in code block 202 may effectively become a "for" loop coupled with a nested "while" statement, as shown on lines 3 and 5, respectively, in FIG. 4. The "for" and "if' statements may make use of the implicit index "i" for variable x. Similarly, the "if' statement in code block 204 may effectively become the "for" and nested "if' statements on lines 8 and 10, and may use the implicit index "j" for variable a.

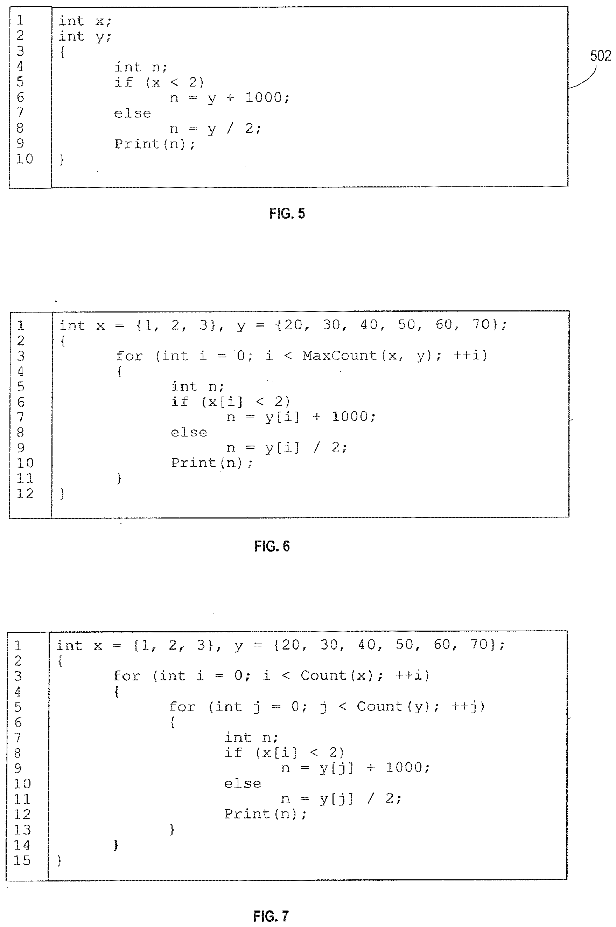

**FIG. 5** illustrates an example of code 502 having two variables within the same code block, i.e., having the same scope, namely, variables "x" and "y" in lines 1 and 2. FIGS. 6 and 7 illustrate two embodiments of decomposed code that may describe the effective result of creating replicatable program flow for the code shown in FIG. 5, and with replicated values for variables x and y. Again, the runtime engine does not actually create the code shown in FIGS. 6 and 7, but the runtime engine may behave as though executing the code shown in FIGS. 6 or 7.

In **FIG. 6****,** the runtime engine may create one implicit index "i" and use the one implicit index to iterate the code in lines 4-9 of FIG. 5. The runtime engine may then behave as though executing the code shown in FIG. 6. This may work in environments that can handle an index out of range situation without generating an error. For example, in GCScript, when a index is used that goes beyond the end of a list, the last item in the list may be returned. For the example in FIG. 6, the iterations for the last three elements of collection "y" would use the last element in collection "x."

In **FIG. 7****,** the runtime engine may create two implicit indexes "i" and "j," one implicit index for each variable. In this embodiment, all combinations of the elements of the collections in x and y may be executed.

In an exemplary embodiment, the runtime engine and TME 104 may support either or both of these techniques for handling multiple replicated values in the same code block. TME 104 may provide a setting to select which technique to follow. The setting may be user-controlled, and/or may have a default value that could be changed.

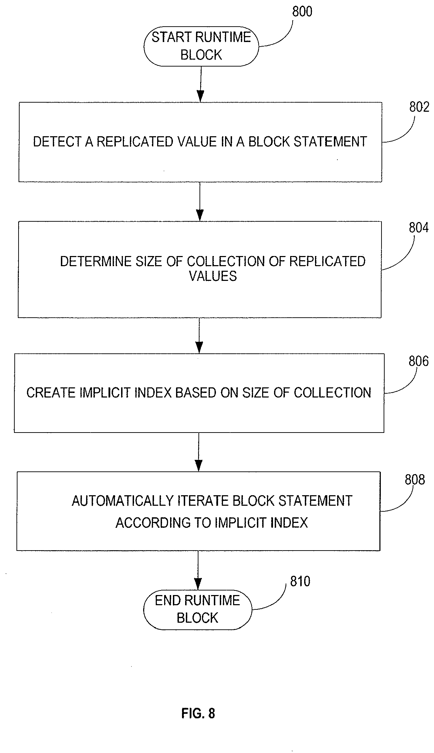

**FIG. 8** depicts a flowchart describing a technique for creating replicatable program flow according to embodiments of the invention. Starting in a runtime block, in block 800, the runtime engine may detect a replicated value at a block statement in block 802. The runtime engine may then determine the size of the collection of replicated values in block 804. In block 806, the runtime engine may create an implicit index for the block statement based on the size of the replicated value collection. In block 808, the block statement may be iterated according to the implicit index, after which the runtime block ends at block 810.

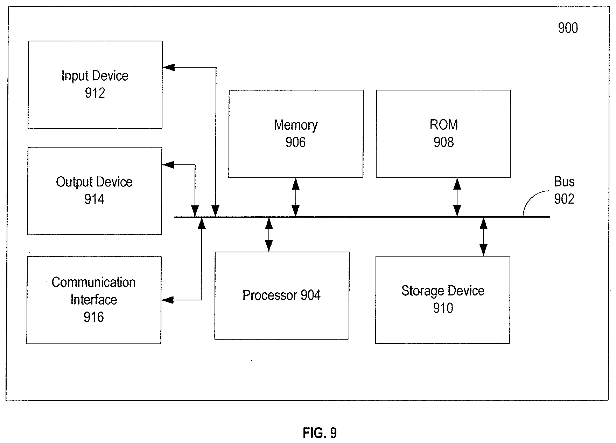

**FIG. 9** depicts an exemplary block diagram of a computer system 900 that may be configured to execute the TME illustrated in FIG. 1. Computer system 900 may include one or more components that may include a bus 902, a processor 904, a memory 906, a read only memory (ROM) 908, a storage device 910, an input device 912, an output device 914, and a communication interface 916.

Bus 902 may include one or more interconnects that permit communication among the components of computer system 900, such as processor 904, memory 906, ROM 908, storage device 910, input device 912, output device 914, and communication interface 916.

Processor 904 may include any type of processor, microprocessor, or processing logic that may interpret and execute instructions (e.g., a field programmable gate array (FPGA)). Processor 904 may comprise a single device (e.g., a single core) and/or a group of devices (e.g., multi-core). The processor 904 may include logic configured to execute computer-executable instructions configured to implement one or more embodiments. The instructions may reside in the memory 906 or ROM 908, and may include instructions associated with the TCE 94.

Memory 906 may be a computer-readable medium that may be configured to store instructions configured to implement one or more embodiments. The memory 906 may be a primary storage accessible to the processor 904 and may comprise a random-access memory (RAM) that may include RAM devices, such as Dynamic RAM (DRAM) devices, flash memory devices, Static RAM (SRAM) devices, etc.

ROM 908 may include a non-volatile storage that may store information and computer-executable instructions for processor 904. The computer-executable instructions may include instructions executed by processor 904.

Storage device 910 may be configured to store information and instructions for processor 904. Examples of storage device 910 may include a magnetic disk, optical disk, flash drive, etc. The information and computer-executable instructions and information may be stored on a medium contained in the storage device 910. Examples of media may include a magnetic disk, optical disk, flash memory, etc. Storage device 910 may include a single storage device or multiple storage devices. Moreover, storage device 910 may attach directly to computer system 900 and/or may be remote with respect to computer system 900 and connected thereto via a network and/or another type of connection, such as a dedicated link or channel.

Input device 912 may include any mechanism or combination of mechanisms that may permit information to be input into computer system 900 from, e.g., a user. Input device 912 may include logic configured to receive information for computer system 900 from, e.g. a user. Examples of input device 912 may include a keyboard, mouse, touch sensitive display device, microphone, pen-based pointing device, and/or biometric input device, etc.

Output device 914 may include any mechanism or combination of mechanisms that may output information from computer system 900. Output device 914 may include logic configured to output information from computer system 900. Embodiments of output device 914 may include displays, printers, speakers, cathode ray tubes (CRTs), plasma displays, light-emitting diode (LED) displays, liquid crystal displays (LCDs), printers, vacuum florescent displays (VFDs), surface-conduction electron-emitter displays (SEDs), field emission displays (FEDs), etc.

Communication interface 916 may include logic configured to interface computer system 900 with a network, and enable computer system 900 to exchange information with other entities connected to the network. Communication interface 916 may include any transceiver-like mechanism that enables computer system 900 to communicate with other devices and/or systems, such as a client, a server, a license manager, a vendor, etc. The communications may occur over a communication medium, such as a data network. Communication interface 916 may include one or more interfaces that are connected to the communication medium. The communication medium may be wired or wireless. Communication interface 916 may be implemented as a built-in network adapter, network interface card (NIC), Personal Computer Memory Card International Association (PCMCIA) network card, card bus network adapter, wireless network adapter, Universal Serial Bus (USB) network adapter, modem or any other device suitable for interfacing computer system 900 to any type of network.

It should be noted that embodiments may be implemented using some combination of hardware and/or software. It should be further noted that a computer-readable medium that comprises computer-executable instructions for execution in a processor may be configured to store various embodiments. The computer-readable medium may include volatile memories, non-volatile memories, flash memories, removable discs, non-removable discs and so on. In addition, it should be noted that various electromagnetic signals such as wireless signals, electrical signals carried over a wire, optical signals carried over optical fiber and the like may be encoded to carry computer-executable instructions and/or computer data that embodiments of the invention on e.g., a communication network.

Embodiments may be embodied in many different ways as a software component. For example, it may be a stand-alone software package, or it may be a software package incorporated as a "tool" in a larger software product, such as, for example, a scientific modeling product. It may be downloadable from a network, for example, a website, as a stand-alone product or as an add-in package for installation in an existing software application. It may also be available as a client-server software application, or as a web-enabled software application.

While various embodiments of the present invention have been described above, it should be understood that they have been presented by way of example only, and not limitation. Thus, the breadth and scope of the present invention should not be limited by any of the above-described exemplary embodiments, but should instead be defined only in accordance with the following claims and their equivalents.

## Claims

1. A computer-implemented method in a computer modeling environment having computer assisted design elements, the method comprising:
detecting (802), by a runtime engine (112) running on one or more processors (904), a first variable in a code block, wherein the first variable contains a collection of design elements;
determining (804), by the runtime engine, a size of the collection of design elements in the first variable based on the number of the design elements contained within the first variable;
creating (806), by the runtime engine, an implicit index based on the size of the collection of design elements, wherein the implicit index includes a current index and the size of the collection of design elements;
automatically iterating (808), by the runtime engine, the code block according to the implicit index; and
outputting, by the runtime engine, a result of iterating the code block.

2. The method of claim 1, wherein automatically iterating the code block comprises at least one of:
iterating sequentially;
iterating in parallel processor threads; or
iterating in parallel on a plurality of processors.

3. The method of claim 1, wherein design elements contained within the first variable are stored in the code block as at least one of: an array, a list, a set, or a matrix.

4. The method of claim 1, further comprising:
detecting a second variable having a same scope as the first variable; and
using the same index to automatically iterate a second code block for the second variable.

5. The method of claim 1, further comprising:
detecting a second variable having a same scope as the first variable;
creating a second index based on the size of the second variable; and
automatically iterating a second code block for the second variable according to the second index.

6. The method of claim 1, further comprising:
downloading software to a computer system, which when executed by the computer system causes the computer system to perform operations comprising the method of claim 1; or
providing downloadable software to a computer system, which when executed by the computer system causes the computer system to perform operations comprising the method of claim 1.

7. A computer-readable medium comprising computer-executable instructions, the medium comprising:
one or more instructions for detecting (802), by a runtime engine (112), a variable in a code block, wherein the variable contains a collection of design elements;
one or more instructions for determining (804), by the runtime engine, a size of the collection-of design elements based on the number of the design elements contained within the collection;
one or more instructions for creating (806), by the runtime engine, an implicit index based on the size-of the collection of design elements, wherein the implicit index includes a current index and the size of the collection of design elements;
one or more instructions for automatically iterating (808), by the runtime engine, the code block according to the implicit index; and
one or more instructions for outputting, by the runtime engine, a result of iterating the code block.

8. The computer-readable medium of claim 7, wherein automatically iterating the code block comprises at least one of:
one or more instructions iterating sequentially;
one or more instructions iterating in parallel processor threads; or
one or more instructions iterating in parallel on a plurality of processors.

9. A system for computer assisted design in a computer modeling environment comprising:
a storage (906; 908; 910); and
a processor (904)configured to:
detect (802) a variable in a code block as containing a collection of design elements;
determine (804) a size of the collection of design elements based on the number of the design elements contained within the variable;
create (806) an implicit index based on the size of the collection of design elements, wherein the implicit index includes a current index and the number of design elements in the collection of design elements;
automatically iterate (808) the code block according to the implicit index; and
output a result of iterating the code block to the storage.

## Patentansprüche

1. Computerimplementiertes Verfahren in einer Computermodell ierungsumgebung mit computergestützten Entwicklungselementen, wobei das Verfahren Folgendes umfasst:
Erkennen (802) einer ersten Variable in einem Codeblock durch eine Laufzeit-Engine (112), die auf einem oder mehreren Prozessoren (904) läuft, wobei die erste Variable eine Sammlung von Entwicklungselementen enthält;
Bestimmen (804) einer Größe der Sammlung von Entwicklungselementen in der ersten Variable auf der Basis der Anzahl der Entwicklungselemente, die innerhalb der ersten Variable enthalten sind, durch die Laufzeit-Engine;
Erzeugen (806) eines impliziten Indexes auf der Basis der Größe der Sammlung von Entwicklungselementen durch die Laufzeit-Engine, wobei der implizite Index einen aktuellen Index und die Größe der Sammlung von Entwicklungselementen beinhaltet;
automatisches Iterieren (808) des Codeblocks gemäß dem impliziten Index durch die Laufzeit-Engine und
Ausgeben eines Ergebnisses des Iterierens des Codeblocks durch die Laufzeit-Engine.

2. Verfahren nach Anspruch 1, wobei das automatische Iterieren des Codeblocks mindestens eines der folgenden umfasst:
sequentielles Iterieren;
Iterieren in parallelen Prozessor-Threads oder
paralleles Iterieren auf einer Vielzahl von Prozessoren.

3. Verfahren nach Anspruch 1, wobei Entwicklungselemente, die innerhalb der ersten Variable enthalten sind, in dem Codeblock als mindestens eines der folgenden gespeichert sind: ein Array, eine Liste, ein Satz oder eine Matrix.

4. Verfahren nach Anspruch 1, weiterhin umfassend:
Erkennen einer zweiten Variable mit demselben Umfang wie die erste Variable und
Verwenden desselben Indexes, um einen zweiten Codeblock für die zweite Variable automatisch zu iterieren.

5. Verfahren nach Anspruch 1, weiterhin umfassend:
Erkennen einer zweiten Variable mit demselben Umfang wie die erste Variable;
Erzeugen eines zweiten Indexes auf der Basis der Größe der zweiten Variable und
automatisches Iterieren eines zweiten Codeblocks für die zweite Variable gemäß dem zweiten Index.

6. Verfahren nach Anspruch 1, weiterhin umfassend:
Herunterladen von Software auf ein Computersystem, die bei Ausführung durch das Computersystem bewirkt, dass das Computersystem Arbeitsschritte durchführt, die das Verfahren nach Anspruch 1 umfassen; oder
Bereitstellen von herunterladbarer Software an ein Computersystem, die bei Ausführung durch das Computersystem bewirkt, dass das Computersystem Arbeitsschritte durchführt, die das Verfahren nach Anspruch 1 umfassen.

7. Computerlesbares Medium, das computerausführbare Anweisungen umfasst, wobei das Medium Folgendes umfasst:
eine oder mehrere Anweisungen zum Erkennen (802) einer Variable in einem Codeblock durch eine Laufzeit-Engine (112), wobei die Variable eine Sammlung von Entwicklungselementen enthält;
eine oder mehrere Anweisungen zum Bestimmen (804) einer Größe der Sammlung von Entwicklungselementen auf der Basis der Anzahl der Entwicklungselemente, die innerhalb der Sammlung enthalten sind, durch die Laufzeit-Engine;
eine oder mehrere Anweisungen zum Erzeugen (806) eines impliziten Indexes auf der Basis der Größe der Sammlung von Entwicklungselementen durch die Laufzeit-Engine, wobei der implizite Index einen aktuellen Index und die Größe der Sammlung von Entwicklungselementen beinhaltet;
eine oder mehrere Anweisungen zum automatischen Iterieren (808) des Codeblocks gemäß dem impliziten Index durch die Laufzeit-Engine und
eine oder mehrere Anweisungen zum Ausgeben eines Ergebnisses des Iterierens des Codeblocks durch die Laufzeit-Engine.

8. Computerlesbares Medium nach Anspruch 7, wobei das automatische Iterieren des Codeblocks mindestens eines der folgenden umfasst:
eine oder mehrere Anweisungen, die sequentiell iterieren;
eine oder mehrere Anweisungen, die in parallelen Prozessor-Threads iterieren; oder
eine oder mehrere Anweisungen, die parallel auf einer Vielzahl von Prozessoren iterieren.

9. System für computergestützte Entwicklung in einer Computermodellierungsumgebung, umfassend:
einen Speicher (906; 908; 910) und
einen Prozessor (904), der zu Folgendem konfiguriert ist:
Erkennen (802) einer Variable in einem Codeblock als eine Sammlung von Entwicklungselementen enthaltend;
Bestimmen (804) einer Größe der Sammlung von Entwicklungselementen auf der Basis der Anzahl der Entwicklungselemente, die innerhalb der Variable enthalten sind;
Erzeugen (806) eines impliziten Indexes auf der Basis der Größe der Sammlung von Entwicklungselementen, wobei der implizite Index einen aktuellen Index und die Anzahl von Entwicklungselementen in der Sammlung von Entwicklungselementen beinhaltet;
automatisches Iterieren (808) des Codeblocks gemäß dem impliziten Index und
Ausgeben eines Ergebnisses des Iterierens des Codeblocks an den Speicher.

## Revendications

1. Un procédé mis en oeuvre par ordinateur dans un environnement de modélisation informatique possédant des éléments de conception assistée par ordinateur, le procédé comprenant :
la détection (802), par un moteur d'exécution (112) exécuté sur un ou plusieurs processeurs (904), d'une première variable dans un bloc de code, la première variable contenant une collection d'éléments de conception,
la détermination (804), par le moteur d'exécution, d'une taille de la collection d'éléments de conception dans la première variable en fonction du nombre des éléments de conception contenus à l'intérieur de la première variable,
la création (806), par le moteur d'exécution, d'un indice implicite en fonction de la taille de la collection d'éléments de conception, l'indice implicite comprenant un indice actuel et la taille de la collection d'éléments de conception,
l'itération automatique (808), par le moteur d'exécution, du bloc de code en fonction de l'indice implicite, et
la production en sortie, par le moteur d'exécution, d'un résultat de l'itération du bloc de code.

2. Le procédé selon la revendication 1, dans lequel l'itération automatique du bloc de code comprend au moins une itération parmi :
une itération séquentielle,
une itération en parallèle de fils d'exécution de processeur, ou
une itération en parallèle sur une pluralité de processeurs.

3. Le procédé selon la revendication 1, dans lequel les éléments de conception contenus à l'intérieur de la première variable sont conservés en mémoire dans le bloc de code sous la forme d'au moins un élément parmi : un tableau, une liste, un ensemble ou une matrice.

4. Le procédé selon la revendication 1, comprenant en outre :
la détection d'une deuxième variable possédant une même portée que la première variable, et
l'utilisation du même indice de façon à itérer automatiquement un deuxième bloc de code pour la deuxième variable.

5. Le procédé selon la revendication 1, comprenant en outre :
la détection d'une deuxième variable possédant une même portée que la première variable,
la création d'un deuxième indice en fonction de la taille de la deuxième variable, et
l'itération automatique d'un deuxième bloc de code pour la deuxième variable en fonction du deuxième indice.

6. Le procédé selon la revendication 1, comprenant en outre :
le téléchargement d'un logiciel vers un système informatique, qui, lorsqu'il est exécuté par le système informatique, amène le système informatique à exécuter des opérations comprenant le procédé selon la revendication 1, ou
la fourniture d'un logiciel téléchargeable vers un système informatique, qui, lorsqu'il est exécuté par le système informatique, amène le système informatique à exécuter des opérations comprenant le procédé selon la revendication 1.

7. Un support lisible par ordinateur contenant des instructions exécutables par ordinateur, le support comprenant :
une ou plusieurs instructions destinées à la détection (802), par un moteur d'exécution (112), d'une variable dans un bloc de code, la variable contenant une collection d'éléments de conception,
une ou plusieurs instructions destinées à la détermination (804), par le moteur d'exécution, d'une taille de la collection d'éléments de conception en fonction du nombre des éléments de conception contenus à l'intérieur de la collection,
une ou plusieurs instructions destinées à la création (806), par le moteur d'exécution, d'un indice implicite en fonction de la taille de la collection d'éléments de conception, l'indice implicite comprenant un indice actuel et la taille de la collection d'éléments de conception,
une ou plusieurs instructions destinées à l'itération automatique (808), par le moteur d'exécution, du bloc de code en fonction de l'indice implicite, et
une ou plusieurs instructions destinées à la production en sortie, par le moteur d'exécution, d'un résultat de l'itération du bloc de code.

8. Le support lisible par ordinateur selon la revendication 7, dans lequel l'itération automatique du bloc de code comprend au moins une opération parmi :
une itération séquentielle d'une ou de plusieurs instructions,
une itération en parallèle d'une ou de plusieurs instructions de fils d'exécution de processeur, ou
une itération en parallèle d'une ou de plusieurs instructions sur une pluralité de processeurs.

9. Un système de conception assistée par ordinateur dans un environnement de modélisation informatique comprenant :
un espace mémoire (906; 908; 910), et
un processeur (904) configuré de façon à :
détecter (802) qu'une variable dans un bloc de code contient une collection d'éléments de conception,
déterminer (804) une taille de la collection d'éléments de conception en fonction du nombre des éléments de conception contenus à l'intérieur de la variable,
créer (806) un indice implicite en fonction de la taille de la collection d'éléments de conception, l'indice implicite comprenant un indice actuel et le nombre d'éléments de conception dans la collection d'éléments de conception,
itérer automatiquement (808) le bloc de code en fonction de l'indice implicite, et
produire en sortie un résultat de l'itération du bloc de code vers l'espace mémoire.
